# EUROPÄISCHE PATENTSCHRIFT

(11) **EP 1 140 400 B1**
(45) Veröffentlichungstag und Bekanntmachung des Hinweises auf die Patenterteilung: **10.11.2004**
(21) Anmeldenummer: 00979473.6
(22) Anmeldetag: 23.09.2000
(51) Int. Cl.: B23B 27/16, B23C 5/24

(54) **ZERSPANUNGS-WERKZEUG FÜR DIE HOCHGESCHWINDIGKEITSBEARBEITUNG**
MACHINING TOOL FOR HIGH-SPEED MACHINING
OUTIL A ENLEVEMENT DE COPEAUX POUR USINAGE A VITESSE ELEVEE

(30) Priorität: 15.10.1999 DE 19949743
(43) Veröffentlichungstag der Anmeldung: 10.10.2001
(73) Patentinhaber: Hollfelder, Hans-Peter, 90766 Fürth (DE)
(72) Erfinder: Hollfelder, Hans-Peter, 90766 Fürth (DE)
(74) Vertreter: Matschkur, Peter
(86) Internationale Anmeldenummer: PCT/EP2000/009314
(87) Internationale Veröffentlichungsnummer: WO 2001/028718

(56) Entgegenhaltungen:
- DE-A- 2 551 183
- DE-A- 3 408 354
- DE-A- 3 410 284
- US-A- 3 785 417

## Beschreibung

Die Erfindung bezieht sich auf ein Zerspanungs-Werkzeug, geeignet auch für die Hochgeschwindigkeitsbearbeitung in der Metallzerspanung, bei der wenigstens ein Schneidkörper in einem Plattensitz eines Werkzeughalters, der nur von einer Rückdruckabstützfläche und einer. Auflagefläche begrenzt ist, durch ein Spannorgan klemmend gehaltert ist, wobei die Auflagefläche für das Spannorgan und die Auflagefläche des Plattensitzes einen die Selbsthemmung übersteigenden, sich zur Rückdruckabstützfläche öffnenden Winkel einschließen, und in eine Nut des Schneidkörpers ein Lagerstift eingreift.

Derartige Spanwerkzeuge sind bereits in den unterschiedlichsten Ausführungsformen bekanntgeworden, wobei es grundsätzlich angestrebt wird, das Werkzeug aus möglichst wenigen in sich selbst gesicherten Bauteilen aufzubauen (z. B. bei einer Hochgeschwindigkeitsbearbeitung notwendig).

Problematisch wird die Konstruktion immer dann, wenn sehr kleine Werkzeugdimensionen gewünscht werden und wenn der Schneidkörper nicht eingelötet ist, sondern geklemmt wird, so dass er im Bedarfsfall einfach ausgewechselt werden kann. In diesen Fällen - man vgl. beispielsweise die Offenlegungsschrift DE 33 43 448 A1 - wiederum bedarf es gerade bei rotierenden Bearbeitungsmaschinen in der Metallzerspanung einer exakten Positionierung des Schneidkörpers, so dass er auch beim Auswechseln oder nach einem Verschleiß sehr einfach immer wieder exakt in die gleiche Position kommt. Will man ein Werkzeug schaffen, welches auf rotierenden Bearbeitungsmaschinen in der Metallzerspanung für eine Vielzahl von Aufgabengebieten einsetzbar ist, wie z. B. das Einstechen von Ringnuten, die Verwendung bei dreiseitig arbeitenden Scheiben- und Zirkülarfräsern, die Endenbearbeitung mit integriertem Bohrer oder mehrschneidige Senk- und Aufbohrwerkzeuge, Reibwerkzeuge od. dgl., so müssen Haupt- und Nebenschneiden des Schneidkörpers im Plattensitz des Werkzeugs frei zum Liegen kommen und kann zwangsläufig nur an der Auflagefläche und der Rückdruckabstützfläche im Werkzeug anliegen. Alle anderen Seiten müssen frei bleiben. Dies wiederum erschwert natürlich die exakte Positionierung in Längsrichtung der Schneide.

Bei einem aus der DE 34 10 284 A1 bekannt gewordenen Zerspanungswerkzeug der eingangs genannten Art wird durch eine Nut des Schneidkörpers, in die ein Lagerstift eingreift, eine exakte wiederholbare Fixierung des Schneidkörpers im Plattensitz erreicht. Dabei handelt es sich allerdings um eine starre Fixierung, die eine nachträgliche zusätzliche Feinjustierung nicht ermöglicht.

Aus der US 3,785,417 ist ein Zerspanungswerkzeug bekannt geworden, bei der eine Schneidplatte so positioniert werden soll, dass die Schneide höhenmäßig in eine ganz bestimmte Lage kommt, das heißt es geht hier um eine Verstellung senkrecht zur Schneidenrichtung. Hierzu sind mindestens zwei Exzenterschrauben vorgesehen; die über weitere Gewindestifte gekontert werden müssen. Es geht dabei lediglich um Positionselemente, um Fertigungstoleranzen im Grundkörper und in der Schneidplatte auszugleichen. Eine Möglichkeit den Schneidkörper im gespannten Zustand zum Feinjustieren verschieben zu können, ist nicht gegeben.

Der Erfindung liegt daher die Aufgabe zugrunde, ein Werkzeug der eingangs genannten Art so auszugestalten, dass der Schneidkörper im gespannten Zustand exakt auf den Plattensitz justierbar verschiebbar ist.

Zur Lösung dieser Aufgabe ist erfindungsgemäß vorgesehen, dass der Lagerstift ein an einem. in einer die Auflagefläche und/oder die Rückdruckabstützfläche durchsetzenden Lagerdurchbrechung des Werkzeughalters drehbar gelagerten und von außen betätigbaren Lagerbolzen exzentrisch und achsparallel zu dessen Drehachse angeordneter Verschiebestift ist, dessen Durchmesser im Wesentlichen der Nutbreite entspricht, wobei der Verschiebestift zur Verschiebung des Schneidkörpers in einer Richtung parallel zur Rückdruckabstützfläche und zur Auflagefläche in die Nut eingreift.

Durch die erfindungsgemäße Ausbildung ergibt sich eine exakte Mitnahmeverkopplung des Schneidkörpers mit dem exzentrisch auf einem Lagerbolzen angeordneten Verschiebestift. Wird der Lagerbolzen um seine Längsachse verdreht, so verschiebt der exzentrische an ihm angeformte oder befestigte Verschiebestift den Schneidkörper in die eine oder andere Richtung parallel zur Schneidkante. Auf diese Art und Weise lässt sich bei festgespanntem Schneidkörper im Rahmen der Exzentrizität des aus Lagerbolzen und Verschiebestift bestehenden Exzenterbolzen die Position des Schneidkörpers auf den Plattensitz verändern und andererseits ist diese Position durch den Verschiebestift auch reproduzierbar in der eingestellten Position arretiert.

In Weiterbildung der Erfindung ist es dabei möglich, die Nut, in diesem Fall vorzugsweise beidends begrenzt, in der an der Auflagefläche anliegenden Bodenfläche des Schneidkörpers anzuordnen oder aber, was im allgemeinen wegen der weiteren Entfernung der Nut von der Schneidkante und damit der höheren Belastbarkeit des Schneidkörpers bevorzugt ist, die Nut in der an der Rückdruckabstützfläche anliegenden Rückfläche des Schneidkörpers anzuordnen. In diesem Fall kann sie zur Erhöhung der Stabilität nach oben begrenzt ausgebildet sein.

Die Achse des Lagerbolzens verläuft zweckmäßigerweise im Wesentlichen parallel zur Rückdruckabstützfläche des Werkzeuges in einer zur Auflagefläche etwa senkrechten Ebene. Durch die Senkrechtstellung der Drehachse des Lagerbolzens zur Auflagefläche kann der Verschiebestift vollständig in die Nut eintauchen, wobei bevorzugt der Lagerbolzen bis unmittelbar unter die Auflagefläche reicht, so dass keine übermäßige Biegebeanspruchung des Verschiebestifts beim Verdrehen des Lagerbolzens auftreten kann.

Um den Lagerbolzen in der Lagerdurchbrechung axial unverschiebbar und dennoch drehbar zu haltern, kann gemäß einem weiteren Merkmal der Erfindung vorgesehen sein, dass der Lagerbolzen eine Ringeinstechnut aufweist, in die ein Axialbegrenzungsstift einragt. Durch Herausdrehen des Axialbegrenzungsstiftes kann der Lagerbolzen mit dem exzentrisch daran ansetzenden Verschiebestift sehr einfach nach oben oder unten aus dem Werkzeughalter herausgenommen werden.

Zur Betätigung des erfindungsgemäßen Exzenterbolzens kann der Lagerbolzen an seinem dem Verschiebestift abgelegenen Ende mit einem Innensechskant od. dgl. zum Ansetzen eines Betätigungswerkzeugs, wie beispielsweise eines Sechskantinbusschlüssels, versehen sein.

Neben dieser Ausbildung des Lagerbolzens als glatter zylindrischer Stift (nur unterbrochen durch die Ringeinstechnut zur Axialbegrenzung) kann auch vorgesehen sein, dass der Lagerbolzen als Gewindebolzen und seine Lagerdurchbrechung im Werkzeughalter als Innengewindebohrung ausgebildet ist. In diesem Fall kann dann ebenfalls eine Ringeinstechnut vorgesehen sein, in die ein Axialbegrenzungsstift einragt, wobei allerdings dann die Breite der Ringeinstechnut größer sein muss als der Durchmesser des Axialbegrenzungsstifts, um eine dem Spiel entsprechende Axialverschiebung des Gewindebolzens zu ermöglichen. Die Tatsache, dass hier bei der Verdrehung des Exzenterbolzens der Verschiebestift mit dem als Gewindebolzen ausgebildeten Lagerbolzen nicht nur exzentrisch verdreht, sondern auch in axialer Richtung verschoben wird, beeinträchtigt die Verstellung des Schneidkörpers nicht, solange nur sichergestellt ist, dass der Verschiebestift nicht mit seinem Stirnende an einer oberen Abdeckbegrenzung der Nut anstoßen kann.

Bei der bevorzugten Ausbildung des Spannorgans zur klemmenden Halterung des Schneidkörpers in seinem Plattensitz als durch eine Spannschraube verklemmbare Spannpratze kann in Weiterbildung der Erfindung vorgesehen sein, dass die Spannpratze an dem dem Plattensitz abgelegenen Ende mit einer Ausnehmung versehen ist, in die ein Verschiebesicherungsstift am Werkzeughalter, beispielsweise eine Nase am Werkzeughalter, eingreift. Dies hat den Vorteil, dass bei der Verschiebung des Schneidkörpers im Plattensitz bei festgeklemmter Spannpratze die Spannpratze mit der Verschiebung des Schneidkörpers nicht mitverschwenkt wird, sondern festgehalten wird, so dass die Spannpratze über die Auflagefläche des Schneidhalters entsprechend gleiten muss.

Schließlich liegt es auch noch im Rahmen der Erfindung, die Achse der Spannschraube schrägliegend nach innen in den Werkzeughalter zu richten, was insbesondere für Scheiben- und Zirkuiarfräser den Vorteil bietet, dass eine größere Anzahl von Schneidkörpern am Umfang des scheibenförmigen Werkzeughalters angeordnet werden können.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine schematische Seitenansicht des vorderen Endes eines erfindungsgemäßen Werkzeugs,
- Fig. 2: einen Schnitt parallel zur Zeichenebene durch das Werkzeug nach Fig. 1,
- Fig. 3: eine Aufsicht auf das Werkzeug nach den Fig. 1 und 2,
- Fig. 4: einen Teilschnitt durch abgewandeltes Werkzeug, bei dem die Verschiebe-Nut im Schneidkörper nach unten und zur Rückdruckabstützfläche offen nach oben aber begrenzt ist,
- Fig. 5: einen Schnitt längs der Linie IV-IV in Fig. 4,
- Fig. 6: einen Schnitt längs der Linie VI-VI in Fig. 3,
- Fig. 7: einen der Fig. 2 entsprechenden Schnitt durch ein abgewandeltes Werkzeug, bei dem der Lagerstift des Exzenterbolzens als Gewindebolzen ausgebildet ist,
- Fig. 8: eine schematische Seitenansicht eines abgewandelten Werkzeugs entsprechend Fig. 1 mit schrägliegend nach innen in den Werkzeughalter gerichteter Achse der Spannschraube,
- Fig. 9: einen Scheibenfräser mit einer Werkzeugausbildung gemäß Fig. 8 zur Verdeutlichung der größeren Anzahl der unterzubringenden Schneidkörper,
- Fig. 10: einen erfindungsgemäß ausgebildeten Scheibenfräser mit Formplatten und Schnittaufteilung,
- Fig. 11: ein erfindungsgemäß ausgebildetes Senkwerkzeug,
- Fig. 12: ein erfindungsgemäß ausgebildetes Endenbearbeitungswerkzeug mit integriertem Bohrer, und
- Fig. 13: ein erfindungsgemäß ausgebildetes Stirneinstichwerkzeug.

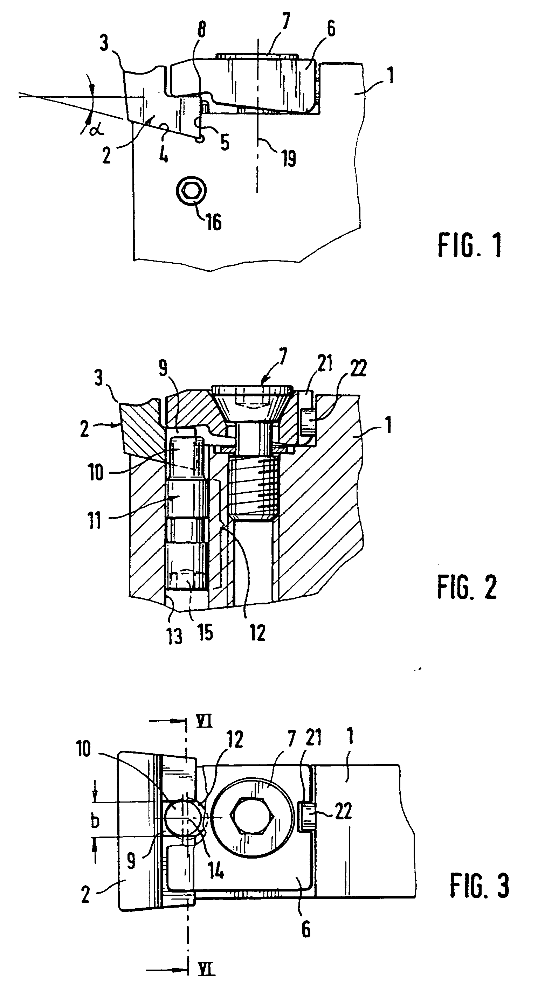

Im Werkzeughalter 1 ist ein Plattensitz zur Halterung eines Schneidwerkzeugs 2 mit einer Schneide 3 ausgebildet, der lediglich aus der Auflagefläche 4 und der Rückdruckabstützfläche 5 besteht, an denen die entsprechenden Seitenflächen des Schneidkörpers 2 anliegen. Alle anderen Seiten sind frei, so dass der durch eine Spannpratze 6 und eine diese verklemmende Spannschraube 7 im Plattensitz verklemmte Schneidkörper 2 senkrecht zur Zeichenebene in Fig. 1 nach hinten oder vorne nicht abgestützt ist. Der Winkel α zwischen der Auflagefläche 4 und der Auflagefläche 8 der Spannpratze 6, der sich zur Rückdruckabstützfläche 5 hin öffnet, ist größer als der Winkel der Selbsthemmung, so dass der Schneidkörper durch den Druck der Spannpratze 6 nach hinten in den Plattensitz gezogen wird.

Der Schneidkörper 2 ist mit einer im Fall des Ausführungsbeispiels nach den Fig. 1 bis 3 von oben nach unten durchgehenden Nut 9 versehen, in die ein exzentrischer Verschiebestift 10 eines Exzenterbolzens 11 eingreift. Der Lagerbolzen 12 dieses Exzenterbolzens 11 ist drehbar in einer durchgehenden zylindrischen Durchbrechung 13 des Werkzeughalters 1 gelagert. Der Durchmesser des exzentrisch und achsparallel zur Drehachse 14 des Lagerbolzens 12 angeordneten Verschiebestifts 10 entspricht exakt der Breite b der Nut 9 im Schneidkörper 2.

Wird also der Exzenterbolzen 11 verdreht, vorzugsweise durch Eingreifen eines Inbuswerkzeugs in eine Sechskantausnehmung 15 am unteren Ende des Lagerbolzens, so wird der exzentrisch am Lagerbolzen 12 sitzende Verschiebestift 10, der spielfrei in der Nut 9 sitzt, den Schneidkörper 2 in Längsrichtung der Hauptschneidkante 3 verschieben, wobei das Verschiebemaß in der Praxis selbstverständlich meist nur wenige Zehntel Millimeter oder weniger beträgt. Es geht ja bei dieser Verschiebbarkeit des Schneidwerkzeugs mit Hilfe des Exzenterbolzens 11 lediglich um eine Feinjustierung der Position des Schneidkörpers. Die Verschiebung des Schneidkörpers 2 mit Hilfe des Exzenterbolzens 11 lässt sich dabei bei festgeklemmtem Schneidkörper, also fest angezogener Spannschraube 7, bewerkstelligen.

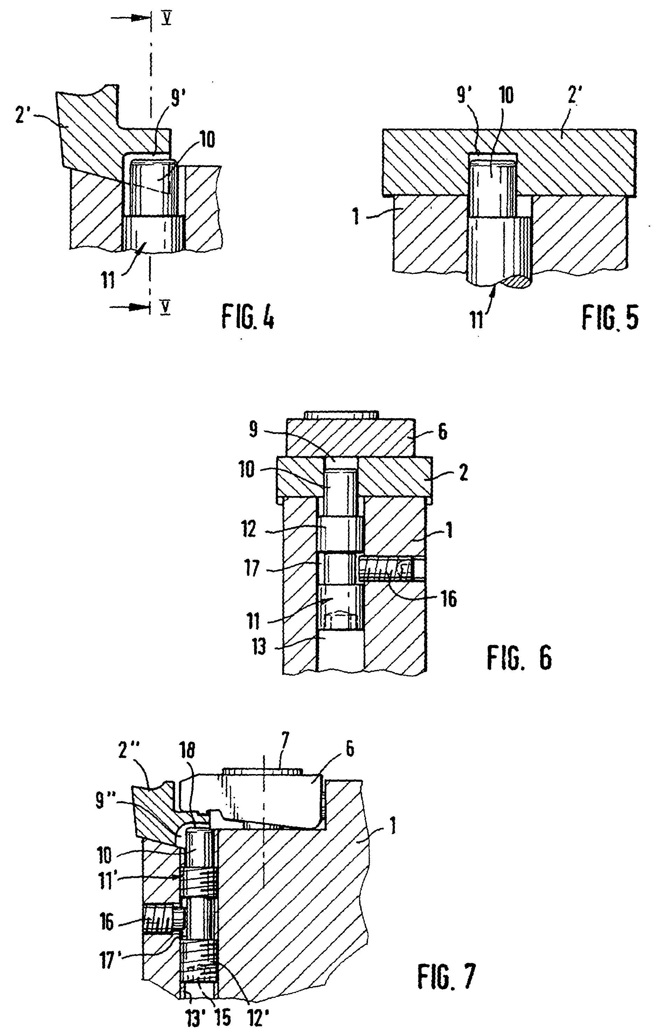

Die Fig. 4 und 5 zeigen Schnitte durch ein abgewandeltes Werkzeug, bei dem der Schneidkörper 2' eine nach oben begrenzte Nut 9' zur Aufnahme des Verschiebestifts 10 des Gewindebolzens 11 aufweist.

Die Fig. 6 lässt den Axialbegrenzungsstift 16 erkennen, der in eine Ringeinstechnut 17 des Lagerabschnitts 12 des Exzenterbolzens 11 eingreift und verhindert, dass der Exzenterbolzen 11 nach unten aus der Lagerdurchbrechung 13 herausfallen kann. In Fig. 7 erkennt man eine abgewandelte Ausführungsform eines erfindungsgemäßen Werkzeugs, bei der der Exzenterbolzen 11' als Gewindebolzen ausgebildet ist.

Der Lagerabschnitt 12' ist also in diesem Fall ein Gewindeabschnitt, der in die ebenfalls als Innengewindebohrung ausgebildete Durchbrechung 13' des Werkzeughalters 1 eingeschraubt ist. Der Axialbegrenzungsstift 16 greift in diesem Fall in eine breitere Ringeinstechnut 17' ein, so dass der als Gewindebolzen ausgebildete Lagerabschnitt 12' begrenzt in axialer Richtung verschiebbar ist und somit zwischen zwei begrenzten Endstellungen durch Verdrehen sich bewegen kann. Dabei erfolgt in gleicher Weise wieder eine Bewegung des exzentrischen Verschiebestifts 10, allerdings mit dem Unterschied, dass der Verschiebestift 10 sich ebenfalls nach oben und unten bewegt. Aus diesem Grund muss bei einer nach oben begrenzten Verschiebe-Nut 9" im Schneidkörper 2", wie es in Fig. 7 dargestellt ist, sichergestellt sein, dass das obere Stirnende 18 des Verschiebestifts 10 nicht an der oberen Begrenzung der Nut 9" anstößt.

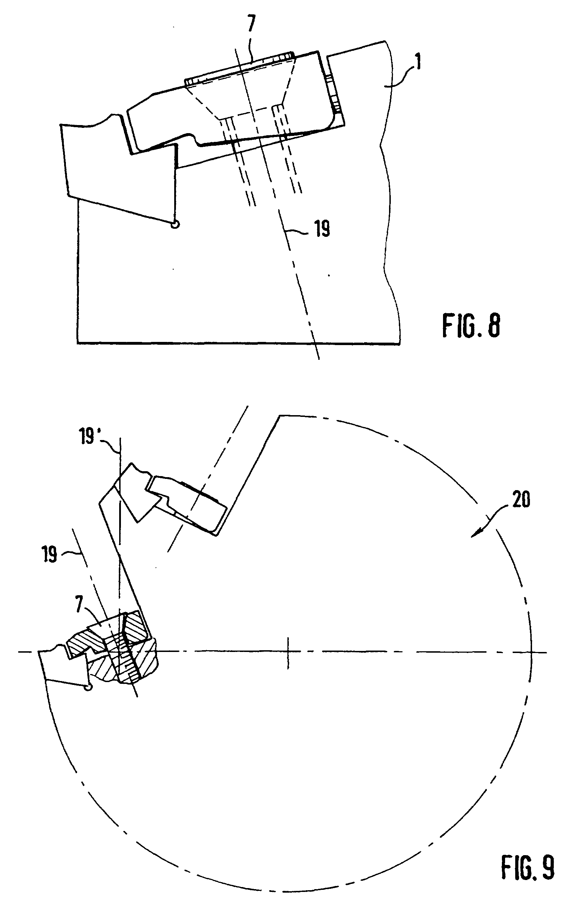

Bei der in Fig. 8 gezeigten Ausbildung eines erfindungsgemäßen Werkzeugs ist die Achse 19 der Spannschraube 7 schrägliegend nach innen in den Halter 1 gerichtet. Dies hat, wie man aus Fig. 9 erkennen kann, den Vorteil, dass man in einem geringeren Winkelabstand einen weiteren Schneidkörper an einem Scheibenfräser 20 anbringen kann. Würde man die Lage der Achse 19 der Spannschraube 7 wie bei den vorhergehenden Ausführungsbeispielen wählen, also die Lage 19', so würde dies bedeuten, dass man den nächstfolgenden Schneidkörper erst weiter rechts anordnen kann, um die freie Zugänglichkeit zur Spannschraube 7 zu gewährleisten, so dass insgesamt weniger Schneidkörper am Umfang des Scheibenfräser gehaltert werden könnten.

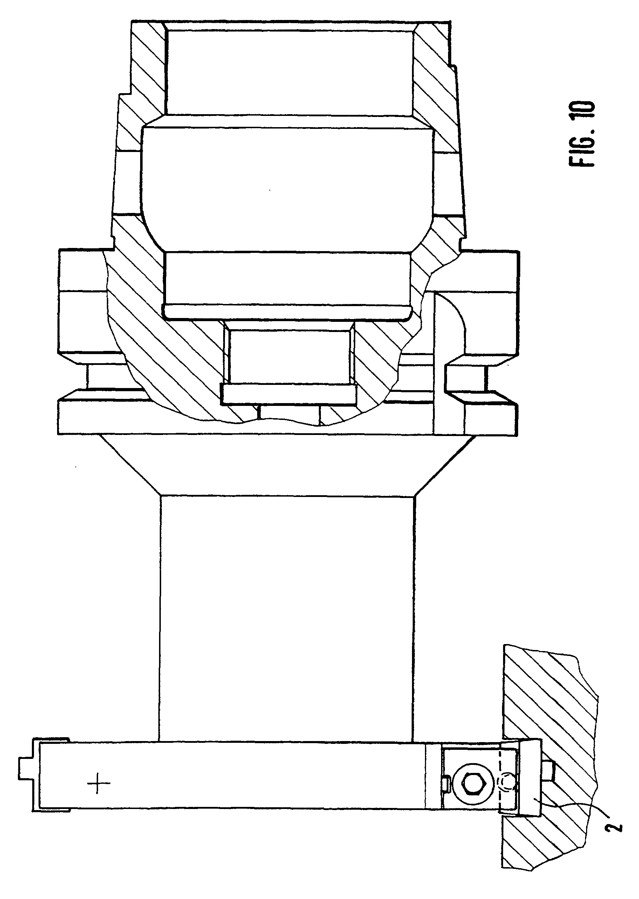

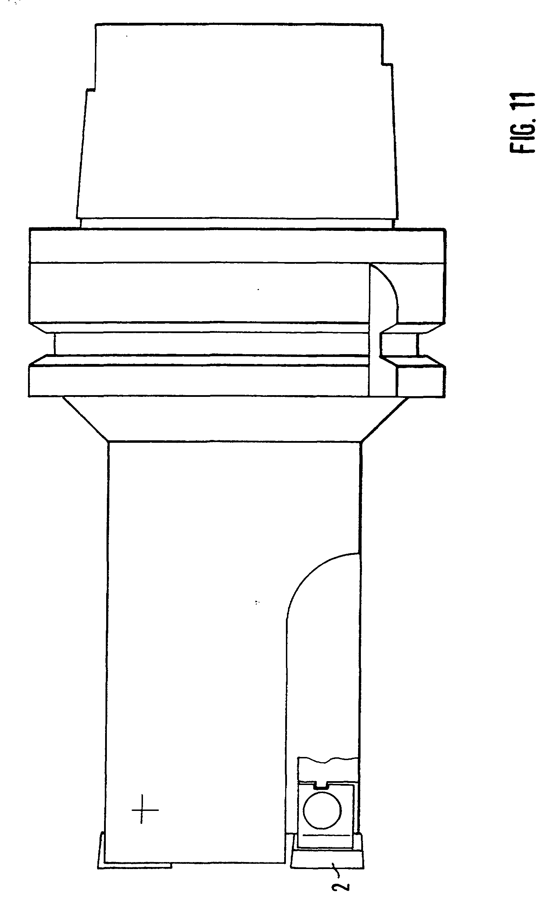

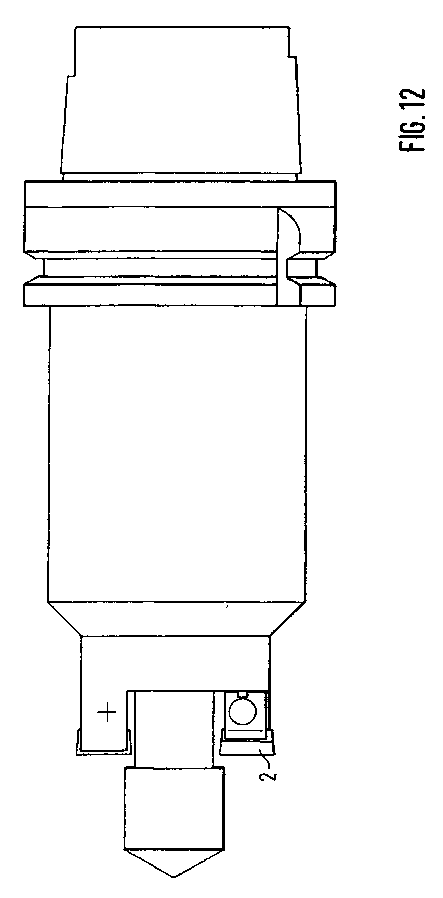

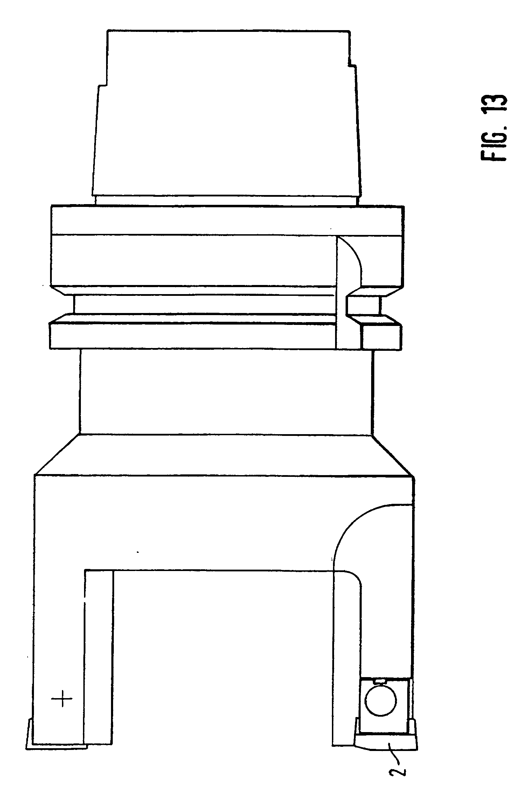

Die Fig. 10 bis 13 zeigen unterschiedliche Werkzeuge, wobei ihnen allen gemeinsam ist, dass die Schneidkörper 2 in den nur zweiseitig begrenzten Plattensitzen der jeweiligen Werkzeughalter auf die erfindungsgemäße Weise verspannt sind, d. h. mit Hilfe eines Exzenterbolzen parallel zur Schneidkante arretierbar verschiebbar sind.

## Patentansprüche

1. Zerspanungs-Werkzeug für die Hochgeschwindigkeitsbearbeitung in der Metallzerspanung, bei der wenigstens ein Schneidkörper (2) in einem Plattensitz eines Werkzeughalters (1), der nur von einer Rückdruckabstützfläche (5) und einer Auflagefläche (4) begrenzt ist, durch ein Spannorgan (6) klemmend gehaltert ist, wobei die Auflagefläche (8) für das Spannorgan (6) und die Auflagefläche (4) des Plattensitzes einen die Selbsthemmung übersteigenden, sich zur Rückdruckabstützfläche (5) öffnenden Winkel (α) einschließen, und in eine Nut (9) des Schneidkörpers (2) ein Lagerstift eingreift, **dadurch gekennzeichnet, dass** der Lagerstift ein an einem in einer die Auflagefläche (4) und/oder die Rückdruckabstützfläche (5) durchsetzenden Lagerdurchbrechung (13, 13') des Werkzeughalters drehbar gelagerten und von außen betätigbaren Lagerbolzen (12, 12') exzentrisch und achsparallel zu dessen Drehachse angeordneter Verschiebestift (10) ist, dessen Durchmesser im Wesentlichen der Nutbreite entspricht, wobei der Verschiebestift (10) zur Verschiebung des Schneidkörpers (2) in einer Richtung parallel zur Rückdruckabstützfläche (5) und zur Auflagefläche (4) in die Nut eingreift.

2. Werkzeug nach Anspruch 1, **dadurch gekennzeichnet, dass** die Nut (9), vorzugsweise beidends begrenzt, in der an der Auflagefläche anliegenden Bodenfläche des Schneidkörpers angeordnet ist.

3. Werkzeug nach Anspruch 1, **dadurch gekennzeichnet, dass** die Nut (9), vorzugsweise nach oben begrenzt, in der an der Rückdruckabstützfläche anliegenden Rückfläche des Schneidkörpers (2) angeordnet ist.

4. Werkzeug nach Anspruch 3, **dadurch gekennzeichnet, dass** die Achse des Lagerbolzens (12, 12') im Wesentlichen parallel zur Rückdruckabstützfläche (5) in einer zur Auflagefläche (4) senkrechten Ebene verläuft.

5. Werkzeug nach einem der Ansprüche 1 bis 4, **dadurch gekennzeichnet, dass** der Lagerbolzen (12, 12') eine Ringeinstechnut (17, 17') aufweist, in die ein Axialbegrenzungsstift (16) einragt.

6. Werkzeug nach einem der Ansprüche 1 bis 5, **dadurch gekennzeichnet, dass** der Lagerbolzen (12, 12') an seinem dem Verschiebestift (10) abgelegenen Ende mit einem Innensechskant (15) od. dgl. zum Ansetzen eines Betätigungswerkzeugs versehen ist.

7. Werkzeug nach einem der Ansprüche 1 bis 6, **dadurch gekennzeichnet, dass** der Lagerbolzen (12') als Gewindebolzen und seine Lagerdurchbrechung (13') im Werkzeughalter (1) als Innengewindebohrung ausgebildet sind.

8. Werkzeug nach Anspruch 7, **dadurch gekennzeichnet, dass** der Lagerbolzen (12') mit einer Ringeinstechnut (17') versehen ist, deren Breite größer ist als der Durchmesser des Axialbegrenzungsstiftes (16).

9. Werkzeug nach einem der Ansprüche 1 bis 8, **dadurch gekennzeichnet, dass** das Spannorgan eine durch eine Spannschraube (7) verklemmbare Spannpratze (6) ist.

10. Werkzeug nach Anspruch 9, **dadurch gekennzeichnet, dass** die Spannpratze (6) an dem dem Plattensitz abgelegenen Ende mit einer Ausnehmung (21) versehen ist, in die ein Verschiebungsstift (22) (Nase am Werkzeughalter) am Werkzeughalter (1) eingreift.

11. Werkzeug nach Anspruch 9 oder 10, insbesondere für Scheiben- und Zirkularfräser, **dadurch gekennzeichnet, dass** die Achse (19) der Spannschraube (7) schrägliegend nach innen in den Werkzeughalter (1) gerichtet ist.

## Claims

1. Cutting tool for high-speed machining in metal cutting, wherein at least one cutting body (2) is mounted gripped by a clamping element in a plate seat of a tool holder (1), which is only limited by a rear pressure support face (5) and a contact face (4), the contact face (8) for the clamping element (6) and the contact face (4) of the plate seat including an angle (α) which overcomes self-locking and opens towards the rear pressure support face (5), and in a groove (9) of the cutting body (2) a bearing pin engages, **characterised in that** the bearing pin is a displacement pin (10) which is disposed on a bearing bolt (12, 12') eccentrically and parallel to its axis of rotation, the bolt being actuatable from outside and rotatably mounted in a bearing perforation (13, 13') of the tool holder, the said perforation penetrating the contact face (4) and/or the rear pressure support face (5), the diameter of the displacement pin (10) being substantially the same as the width of the groove, the displacement pin (10) engaging in the groove in order to displace the cutting body (2) in a direction parallel to the rear pressure support face (5) and to the contact face (4).

2. Tool according to claim 1, **characterised in that** the groove (9) is disposed in the base face of the cutting body abutting the contact face, the groove being preferably limited at both ends.

3. Tool according to claim 1, **characterised in that** the groove (9) is disposed in the rear face of the cutting body (2) abutting the rear pressure support face, the groove being preferably limited at the top.

4. Tool according to claim 3, **characterised in that** the axis of the bearing bolt (12, 12') extends in a plane perpendicular to the contact face (4) substantially parallel to the rear pressure bearing face (5).

5. Tool according to one of claims 1 to 4, **characterised in that** the bearing bolt (12, 12') has an annular recessed groove (17, 17') into which an axial limit pin (16) projects.

6. Tool according to one of claims 1 to 5, **characterised in that** the bearing bolt (12, 12') is provided at its end remote from the displacement pin (10) with a hexagon socket (15) or the like for applying an actuating tool.

7. Tool according to one of claims 1 to 6, **characterised in that** the bearing bolt (12') takes the form of a threaded bolt and its bearing perforation (13') in the tool holder (1) the form of a female-threaded bore.

8. Tool according to claim 7, **characterised in that** the bearing bolt (12') is provided with an annular recessed groove (17'), whose width is larger than the diameter of the axial limit pin (16).

9. Tool according to one of claims 1 to 8, **characterised in that** the clamping element is a clamping claw (6) lockable by a clamping screw (7).

10. Tool according to claim 9, **characterised in that** the clamping claw (6) is provided on the end remote from the plate seat with a recess (21), into which a displacement pin (22) (nose on the tool holder) engages on the tool holder (1).

11. Tool according to claim 9 or 10, in particular for side milling cutters and circular milling cutters, **characterised in that** the axis (19) of the clamping screw (7) is oriented obliquely inwards in the tool holder (1).

## Revendications

1. Outil pour l'enlèvement de copeaux, destiné à l'usinage à grande vitesse dans le domaine de l'enlèvement de copeaux métalliques, du type dans lequel au moins un corps de coupe (2), monté dans un siège d'un plateau d'un porte-outils (1), qui n'est délimité que par une surface de soutien à contre-pression (5) et par une surface d'appui (4), est maintenu par pincement par un organe de mise sous tension (6), la surface d'appui (8) de l'organe sous tension (6) et la surface d'appui (4) du siège du plateau faisant entre elles un angle α s'ouvrant vers la surface de soutien à contre pression (5) et dépassant l'auto-blocage, et une cheville de montage s'engrène dans une rainure (9) du corps de coupe (2), **caractérisé en ce que** la cheville de montage est une cheville coulissante (10) disposée sur un boulon (12, 12') monté rotatif dans une ouverture de montage (13,13') traversant la surface d'appui (4) et la surface de soutien à contre-pression (5) du porte-outils, excentrée et parallèle à l'axe de celui-ci et actionnable de l'extérieur, et dont le diamètre correspond pratiquement à la largeur de la rainure, la cheville coulissante (10) engrènant dans la rainure, en vue du coulissement du corps de coupe ( 2) dans une direction parallèle à la surface de soutien sous contre pression (5) et à la surface d'appui (4).

2. Outil selon la revendication 1, **caractérisé en ce que** la rainure (9) est située dans la surface de fond reposant sur la surface d'appui du corps de coupe, de préférence délimitée aux deux extrémités.

3. Outil selon la revendication 1, **caractérisé en ce que** la rainure (9) est située sur la surface postérieure reposant sur la surface de soutien à contre-pression du corps de coupe (2), de préférence délimitée vers le haut.

4. Outil selon la revendication 3, **caractérisé en ce que** l'axe du boulon de montage (12) s'étend pratiquement parallèlement à la surface de soutien à contre pression (5), dans un plan perpendiculaire à la surface d'appui (4).

5. Outil selon l'une quelconque des revendications 1 à 4, **caractérisé en ce que** le boulon de montage (12, 12') présente une rainure d'insertion de bague (17, 17') dans laquelle s'enfonce une goupille de limitation axiale.

6. Outil selon l'une quelconque des revendications 1 à 5 , **caractérisé en ce que** le boulon de montage (12,12') est pourvu, à son extrémité opposée à la cheville coulissante (10), d'un hexagone intérieur ou analogue (15), en vue de l'insertion d'un outil d'actionnement.

7. Outil selon l'une quelconque des revendications 1 à 6, **caractérisé en ce que** le boulon de montage (12') consiste en un boulon fileté, et **en ce que** son ouverture (13') dans le porte-outils (1) consiste en un alésage à filetage intérieur.

8. Outil selon la revendication 7, **caractérisé en ce que** le boulon de montage (12') présente une rainure d'insertion de bague (17') dont la largeur est supérieure au diamètre de la goupille de limitation axiale (16).

9. Outil selon l'une quelconque des revendications 1 à 8, **caractérisé en ce que** l'organe de mise sous tension est une détente de mise sous tension pouvant être pincée par une vis de mise sous tension.

10. Outil selon la revendication 9, **caractérisé en ce que** la gâchette de mise sous tension (6) présente, à son extrémité opposée au siège de plateau, un évidement 21, dans lequel s'engrène une goupille de coulissement (22) du porte-outils (1).

11. Outil selon l'une des Revendications 9 ou 10, en particulier pour fraiseuse à disque ou fraiseuse circulaire, **caractérisé en ce que** l'axe (19) de la vis de mise sous tension (7) est orienté obliquement vers l'intérieur dans le porte-outils (1).
